# EUROPEAN PATENT SPECIFICATION

(11) **EP 1 659 719 B1**
(45) Date of publication and mention of the grant of the patent: **25.04.2007**
(21) Application number: 05016482.1
(22) Date of filing: 29.07.2005
(51) Int. Cl.: H04J 3/14

(54) **Apparatus for protecting low/high order traffic boards in a synchronous digital hierarchy transmission device**
Vorrichtung zum Schützen von Verkehrskarten niederer/hoher Ordnung in einem Übertragungsgerät für synchrone digitale Hierarchie
Dispositif pour protéger des cartes de trafic d'ordre faible/élevé dans un dispositif de transmission à hierarchie numerique synchrone

(30) Priority: 19.11.2004 CN 200410084377
(43) Date of publication of application: 24.05.2006
(73) Proprietor: Alcatel Lucent, 75008 Paris (FR)
(72) Inventor: You Gang, c/o Alcatel Shanghai Bell, 2001206 Shanghei (CN); Yao Jin, c/o Alcatel Shanghai Bell, 2001206 Shanghei (CN)
(74) Representative: Schmidt, Werner Karl

(56) References cited:
- EP-A- 1 328 085
- WO-A-96/01533
- US-A- 5 229 990
- US-A- 5 596 569

## Description

### FIELD OF THE INVENTION

The present invention relates to protection technique for protecting low/high order traffic boards in a synchronous digital hierarchy transmission device.

### BACKGROUND OF THE ART

At present, synchronous digital hierarchy (SDH) transmission devices have been heavily applied in an optical transmission network. SDH transmission devices are equipped with standard optical interfaces, utilize synchronous multiplex and can be easily managed and maintained. Hence, they have already been substantially substituted for plesiochronous digital hierarchy transmission devices.

In a synchronous digital hierarchy transmission device, the main function of low order traffic boards (herein referring to E1 traffic boards, E1 interface is a primary-group-line interface with a rate of 2.048Mb/s in a plesiochronous digital hierarchy, belonging to Europe system) is to perform mapping E1 signals to SDH frames and demapping thereof. The E1 interface can be directly connected to a switch, so low order traffic boards are often in the majority in a configuration of the SDH transmission device. Once a fault occurs in a low order traffic board, smoothness of low order channel traffic will be affected, namely transmission E1 signals in SDH frames. Thus, operators often want to provide redundant protection for it. That is to say, when a fault occurs in a certain low order traffic board, there needs a protection board which take the place of the low order traffic board in fault for transmission of E1 signals.

As such, within SDH transmission device, once a fault occurs in a high order traffic board (for example, E3 traffic board, E3 interface is a tertiary-group-line interface with a rate of 34.386Mb/s in a plesiochronous digital hierarchy, belonging to Europe system), smoothness of high order channel traffic will be affected. Operators hope that there will be an effective way for its redundant protection as well.

In development of SDH transmission devices, a problem to be solved is how to design a protection method for effective protection for low/high order traffic boards without increasing complexity of the system as well as the overall cost.

### SUMMARY OF THE INVENTION

For the need of redundant protection for the low/high order traffic boards in a SDH transmission device, the present invention is directed to providing an apparatus for protecting low/high order traffic boards by which efficient protection for low/high order traffic boards is achieved without increasing complexity of a system and cost.

In order to achieve the above object, the technical solution is as defined in claim 1.

In order to achieve the above object, the technical solution is as defined in independent claim 2.

By means of the above technical solutions, i.e. sufficiently considering not increasing complexity of a system, a set of low/high order protection buses are provided in the design, redundant protection for the low/high order traffic board is achieved by a low/high order protection board with simple design so as to enhance reliability of the system. In addition, the low/high order protection boards can be plugged to any slot of the port region to increase flexibility of the system. The invention provides redundant protection for the traffic boards in a low-cost and simple manner.

### BRIEF DESCRIPTION OF THE DRAWINGS

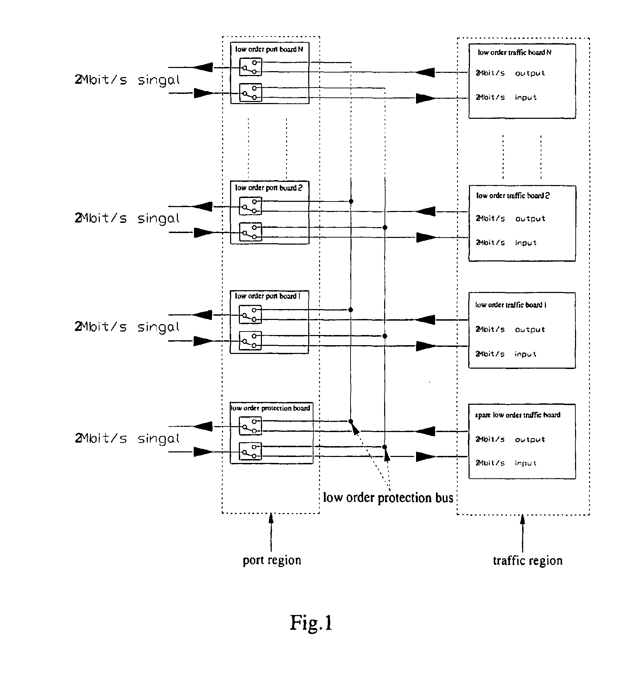

Figure 1 is a structural block diagram of an apparatus for protecting low order traffic boards in a SDH transmission device.

### PREFERRED EMBODIMENT

Figure 1 illustrates a connecting relationship between low order traffic boards and low order port boards. Generally, a plurality of low order traffic boards and low order port boards can be plugged in a sub-frame of a transmission device. In a normal condition, each low order traffic board transmits E1 signals with 2.048Mb/s to a respective low order port board and the low order port boards provide outside physical interfaces for transmitting and receiving E1 signals. As show in the figure, low order traffic board 1 is connected to low order port board 1, low order traffic board 2 is connected to low order port board 2, and low order traffic board N is connected to low order port board N. Each low order port board can receive E1 signals of a spare low order traffic board from a low order protection board via a low order protection bus besides low order E1 signals from a respective low order traffic board.

When redundant protection for a low order traffic board is needed, a spare low order traffic board is plugged in any slot in a traffic region of the device (the spare low order traffic board and the operative low order traffic board are completely in common use) and a dedicated low order protection board is plugged in a port region corresponding to a slot of the spare low order traffic board.

Assuming that a fault occurs in low order traffic board N, the spare low order traffic board goes into operation at this point and the E1 signals transmitted by the spare low order traffic board are forwarded on the low order protection bus via the low order protection board. For low order port board N, it has detected a fault occurred in the E1 signals from low order traffic board N and switches to the low order protection bus to receive the E1 signals transmitted by the spare low order traffic board. In this way, the spare low order traffic board substantially takes the place of low order traffic board N for operation, and thus protection for low order traffic board in fault will be achieved.

In the design of this solution, low order protection board can be plugged in any slot of the low order port region and the main function thereof is to connect the low order protection bus to bus of the spare low order traffic board. Such a design for the low order protection board is very simple and at low cost. That is, when a fault occurs in a low order traffic board in the device, the low order E1 signals is backwarded to the spare low order traffic board via the low order protection board, so that protection for the low order traffic board in fault is achieved.

When at most N operative low order traffic boards can be plugged in the system, this solution will achieve redundant protection for low order traffic board N+1.

As such, an apparatus for protecting high order traffic boards in a synchronous digital hierarchy transmission device is similar to the above apparatus for protecting high order traffic boards, and comprises a spare high order traffic board arranged at said high order traffic region, a set of high order protection buses, arranged in said backboard of said synchronous digital hierarchy transmission device and respectively connected to said high order port board, for enabling each high order port board to receive a signal transmitted via said high order protection buses, and a high order protection board, arranged at said port region and plugged in a slot of said high order port board, for connecting said high order protection buses to buses of said spare high order traffic board. The high order protection board can be plugged in any slot of the port region of the device for achievement of redundant protection for high order traffic board N+1.

The protection technique for the low/high order traffic boards of the present invention is also suitable for protection design of other traffic boards which need to be protected in the transmission device.

The above embodiments of the present invention have been presented by way of example only, and not limitation. It should be noted that various changes and modifications could be made by those skilled in the art herein. Therefore, all equivalent technical solutions should belong to the scope of the present invention which should be limited by the attached claims.

## Claims

1. An apparatus for protecting low order traffic boards in a synchronous digital hierarchy transmission device, a backboard of said synchronous digital hierarchy transmission device comprising a port region composed of a plurality of low order port boards and a traffic region composed of a plurality of low order traffic boards which one-to-one correspond to said plurality of low order port boards,
a spare low order traffic board plugged in a slot of said low order traffic region;
the apparatus being **characterized by**
a set of low order protection buses, arranged in said backboard of said synchronous digital hierarchy transmission device and respectively connected to each of said low order port boards, for enabling each low order port board to receive a signal transmitted via said low order protection buses;
a low order protection board, arranged at said port region and plugged in a port region slot corresponding to the slot of the spare low order traffic board , for connecting said low order protection buses to buses of said spare low order traffic board.

2. An apparatus for protecting high order traffic boards in a synchronous digital hierarchy transmission device, a backboard of said synchronous digital hierarchy transmission device comprising a port region composed of a plurality of high order port boards and a traffic region composed of a plurality of high order traffic boards which one-to-one correspond to said plurality of high order port boards,
a spare high order traffic board plugged in a slot of said high order traffic region;
the apparatus being **characterized by**
a set of high order protection buses, arranged in said backboard of said synchronous digital hierarchy transmission device and respectively connected to each of said high order port boards for enabling each high order port board to receive a signal transmitted via said high order protection buses;
a high order protection board, arranged at said port region and plugged in a port region slot corresponding to the slot of the spare high order traffic board , for connecting said high order protection buses to buses of said spare high order traffic board.

## Patentansprüche

1. Vorrichtung zur Absicherung von Verkehrskarten niedriger Ordnung in einer Übertragungseinrichtung für die synchrone digitale Hierarchie, eine Rückwand der Übertragungseinrichtung für die synchrone digitale Hierarchie, die einen Anschluss-Bereich enthält, der aus einer Vielzahl von Anschlusskarten niedriger Ordnung zusammengesetzt ist, und einen Verkehrs-Bereich, der aus einer Vielzahl von Verkehrskarten niedriger Ordnung zusammengesetzt ist, die eins zu eins der Vielzahl von Anschlusskarten niedriger Ordnung entsprechen,
eine Ersatz-Verkehrskarte niedriger Ordnung, die in einen Steckplatz des Verkehrs-Bereichs niedriger Ordnung eingesteckt ist;
wobei die Vorrichtung durch folgendes **gekennzeichnet ist:**
**Durch** einen Satz von Absicherungs-Bussen niedriger Ordnung, der in der Rückwand der Übertragungseinrichtung für die synchrone digitale Hierarchie angeordnet und jeweils mit jeder der Anschlusskarten niedriger Ordnung verbunden ist, um jede Anschlusskarte niedriger Ordnung in die Lage zu versetzen, ein Signal zu empfangen, das über die Absicherungs-Busse niedriger Ordnung übertragen wird;
**Durch** eine Absicherungs-Karte niedriger Ordnung, die in dem Anschluss-Bereich angeordnet und in einen Anschluss-Bereichs-Steckplatz eingesteckt ist, der dem Steckplatz der Ersatz-Verkehrskarte niedriger Ordnung entspricht, um die Absicherungs-Busse niedriger Ordnung mit Bussen der Ersatz-Verkehrskarte niedriger Ordnung zu verbinden.

2. Vorrichtung zur Absicherung von Verkehrskarten hoher Ordnung in einer Übertragungseinrichtung für die synchrone digitale Hierarchie, eine Rückwand der Übertragungseinrichtung für die synchrone digitale Hierarchie, die einen Anschluss-Bereich enthält, der aus einer Vielzahl von Anschlusskarten hoher Ordnung zusammengesetzt ist, und einen Verkehrs-Bereich, der aus einer Vielzahl von Verkehrskarten hoher Ordnung zusammengesetzt ist, die eins zu eins der Vielzahl von Anschlusskarten hoher Ordnung entsprechen,
eine Ersatz-Verkehrskarte hoher Ordnung, die in einen Steckplatz des Verkehrs-Bereichs hoher Ordnung eingesteckt ist;
wobei die Vorrichtung durch folgendes **gekennzeichnet ist:**
**Durch** einen Satz von Absicherungs-Bussen hoher Ordnung, der in der Rückwand der Übertragungseinrichtung für die synchrone digitale Hierarchie angeordnet und jeweils mit jeder der Anschlusskarten hoher Ordnung verbunden ist, um jede Anschlusskarte hoher Ordnung in die Lage zu versetzen, ein Signal zu empfangen, das über die Absicherungs-Busse hoher Ordnung übertragen wird;
**Durch** eine Absicherungs-Karte hoher Ordnung, die in dem Anschluss-Bereich angeordnet und in einen Anschluss-Bereichs-Steckplatz eingesteckt ist, der dem Steckplatz der Ersatz-Verkehrskarte hoher Ordnung entspricht, um die Absicherungs-Busse hoher Ordnung mit Bussen der Ersatz-Verkehrskarte hoher Ordnung zu verbinden.

## Revendications

1. Appareil de protection de cartes de trafic d'ordre faible dans un dispositif de transmission à hiérarchie numérique synchrone, une carte arrière dudit dispositif de transmission à hiérarchie numérique synchrone comprenant une région de port constituée par une pluralité de cartes de port d'ordre faible et une région de trafic constituée par une pluralité de cartes de trafic d'ordre faible qui correspondent une par une à ladite pluralité de cartes de port d'ordre faible,
une carte de trafic d'ordre faible de secours branchée dans une fente de ladite région de trafic d'ordre faible ;
l'appareil étant **caractérisé par**
un jeu de bus de protection d'ordre faible, disposés dans ladite carte arrière dudit dispositif de transmission à hiérarchie numérique synchrone et respectivement connectés à chacune desdites cartes de porte d'ordre faible, afin de permettre à chaque carte de port d'ordre faible de recevoir un signal transmis via lesdits bus de protection d'ordre faible ;
une carte de protection d'ordre faible, disposée au niveau de ladite région de port et branchée dans une fente de la région de port correspondant à la fente de la carte de trafic d'ordre faible de secours afin de connecter lesdits bus de protection d'ordre faible aux bus de ladite carte de trafic d'ordre faible de secours.

2. Appareil de protection de cartes de trafic d'ordre élevé dans un dispositif de transmission à hiérarchie numérique synchrone, une carte arrière dudit dispositif de transmission à hiérarchie numérique synchrone comprenant une région de port constituée par une pluralité de cartes de port d'ordre élevé et une région de trafic constituée par une pluralité de cartes de trafic d'ordre élevé qui correspondent une par une à ladite pluralité de cartes de port d'ordre élevé,
une carte de trafic d'ordre élevé de secours branchée dans une fente de ladite région de trafic d'ordre élevé ;
l'appareil étant **caractérisé par**
un jeu de bus de protection d'ordre élevé, disposés dans ladite carte arrière dudit dispositif de transmission à hiérarchie numérique synchrone et respectivement connectés à chacune desdites cartes de porte d'ordre élevé, afin de permettre à chaque carte de port d'ordre élevé de recevoir un signal transmis via lesdits bus de protection d'ordre élevé ;
une carte de protection d'ordre élevé, disposée au niveau de ladite région de port et branchée dans une fente de la région de port correspondant à la fente de la carte de trafic d'ordre élevé de secours afin de connecter lesdits bus de protection d'ordre élevé aux bus de ladite carte de trafic d'ordre élevé de secours.
